# EUROPEAN PATENT APPLICATION

(11) **EP 2 568 674 A1**
(43) Date of publication of application: **13.03.2013**
(21) Application number: 11306030.5
(22) Date of filing: 10.08.2011
(51) Int. Cl.: H04L 12/70, H04L 29/14, H04L 29/08, H04L 29/06

(54) **An enterprise telephone network with automatic recovery of services**

(71) Applicant: Alcatel Lucent, 75007 Paris (FR)
(72) Inventor: Fadili, Moulay, 92707 Colombes (FR); Brunel, Sebastien, 92707 Colombes (FR); Barbero, Laurent, 92707 Colombes (FR)
(74) Representative: Sciaux, Edmond

(57) **Abstract**

A gateway (RMGW) for the survivability of services in an enterprise network comprises:
- means (CA) for detecting whether an Internet protocol network (IPN) is not working, and establishing a backup communication channel (C) to the main site (A) of the enterprise network via a public telephone network (PSTN) when the Internet network (IPN) is not working;
- a remote server (RSV), dedicated to said given service, for receiving (301) a service request from a terminal (T1) of the remote site (B) of the enterprise network, when the Internet protocol network (IPN) is not working; and for forwarding it;
- and a remote service relay (RSRY) for receiving the request forwarded by the local server (RSV) and forwarding (303) it to the main site via the backup communication channel (C), by means of a protocol adapted to said given service.

## Description

### BACKGROUND OF THE INVENTION

### Field of the invention

The present invention generally relates to an enterprise telecommunication network, using the Internet protocol (IP), and providing automatic recovery of services in case of interruption of an IP link between a main site and a remote site.

In an enterprise telecommunication network using IP, the main site is equipped with communication servers, media gateways, and terminals such as IP phones, soft phones, etc ... The remote sites are equipped with media gateways and terminals. The link between the main site and remote sites is more and more often an IP link. This IP link is used by servers of the main site to provide services to terminals of the remote site.

If there is an interruption in the IP link between the main site and the remote site, because of a failure of the IP network supporting it, it is necessary to continue to provide at least some basic telephone services to the terminals of the remote site. A known solution consists in installing, in each remote site, some backup means that enable the users located in the remote site, to call other users located on the same remote site or anywhere in the same enterprise network, by using an external link supported by a public network (Public switched Telephone Network, or public land mobile network). However some telephony services that are usually provided by the main site, via the IP network, are no longer available on the remote site when these backup means are used. For instance, the services "phone book", "call by name", "call forwarding ...", "authentication", "configuration and management" are not available anymore.

### Description of the prior art:

- Some remote sites may respectively be equipped with backup servers only providing a subset of the services, in case of failure of the IP network. The number of services is reduced; however this solution is expensive.
- Some remote sites may be equipped with a local data base, such as a private phone book. This solution is not satisfactory, because the data base of the main site must be replicated into each local data base, and each local data base must be frequently updated.
- It is possible to entirely duplicate, in each remote site, the communication server used in the main site. This solution is very expensive. So it is not applicable to small remote sites.
- It is possible to use global IP routing over the public switched telephone network, but it is also an expensive solution and it causes extra bandwidth consumption.

These known solutions are not quite satisfactory. Thus, there is a need to provide a cheap solution for automatic recovery of services in an enterprise telecommunication network when an IP link between a main site and a remote site is interrupted.

### SUNIMARY OF THE INVENTION

A first object of the invention is a gateway for a remote site of an enterprise network that comprises a main site and at least one remote site, the main site comprising a main media gateway and at least a main server dedicated to a given service;
and the remote site comprising said gateway and terminals that can request at least this given service from said main server via an Internet protocol network.

This gateway for a remote site is characterized in that it comprises:
- means for detecting whether the Internet protocol network is not working, and establishing a backup communication channel to the main site via a public telephone network when the Internet network is not working;
- a remote server, dedicated to said given service, for receiving a service request from a terminal of the remote site when the Internet protocol network is not working; and for forwarding it;
- and a remote service relay for receiving the request forwarded by the local server and forwarding it to the main site via the backup communication channel, by means of a protocol adapted to said given service.

Thanks to the remote server collaborating with the service relay and the backup communication channel, the service requests originating from the terminals of the remote site are not blocked by the failure of the IP network. They are dealt with by the remote server and the service relay that take care of forwarding them to the main server in the main site via the backup communication channel supported by a public telephone network.

According to a peculiar embodiment of this gateway according to the present invention, it further comprises a cache memory; and said remote server comprises means for:
- checking the content of this cache memory for determining whether a same request was previously responded;
- reading the response in the cache memory if a same request was previously responded;
- and sending the response to the terminal that sent the request.

Thanks to this cache memory, when a same service request occurs several times, it forwarded only once to the main site via the backup communication channel. So this cache memory spares network resources.

A second object of the invention is a media gateway for the main site, the main site comprising said media gateway and at least a main server dedicated to a given service;
and the remote site comprising a remote gateway and terminals that can request at least this given service from said main server via an Internet protocol network.

This media gateway for the main site is characterized in that it comprises:
- a main service relay for receiving a service request via a backup link supported by a public telephone network when the Internet protocol network is not working, said service request being sent by means of a protocol adapted to said given service, and originating from a terminal of the remote site; and for forwarding it;
- a main client dedicated to said given service, for receiving a service request forwarded by the main service relay, and for forwarding it to the main server dedicated to said given service.

Thanks to this characteristic, in case of failure of the IP network, the service requests arriving at the main site, via a backup communication channel supported by a public telephone network, are dealt with by the main server as if they were carried through the IP network.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 is a block diagram showing an exemplary enterprise network comprising a media gateway according to the invention, and illustrating the case where the IP link between the main site and a remote site is working normally.
- Figure 2 is a block diagram showing the same exemplary enterprise network, and illustrating the case where the IP link between the main site and a remote site is not working normally.
- Figure 3 shows a signaling flow in this exemplary enterprise network, and illustrates the case where the IP link between the main site and a remote site is not working normally.

### DETAILED DESCRIPTION OF A PREFERRED EMBODIMENT

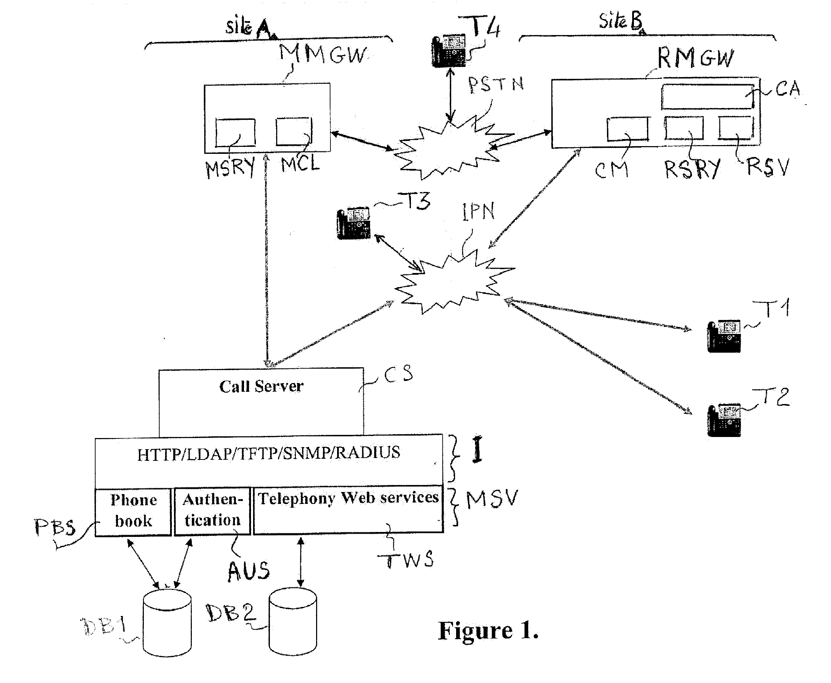

The exemplary enterprise network represented on figure 1 comprises, on a main site A:
- IP terminals such as T3 (IP Phones, or SIP phones, or soft phones) that are linked to an IP network IPN, via an Ethernet local area network (not represented).
- A call server CS that is linked to the IP network IPN, via the Ethernet local area network (not represented).
- A set of main servers MSV: A phone book server PBS, an authentication server AUS, and a telephony web server TWS.
- A set of interfaces I enabling communications between the call server CS and these servers PBS, AUS, TWS respectively. These interfaces are adapted to: protocol LDAP for the phone book service, protocols SNMP for the network administration service, protocol RADIUS for the authentication service, and protocol HTTP for telephony web services.
- A data base DB1 is associated to the servers PBS and AUS. A data base DB2 is associated to the server TWS.
- A main media gateway MMGW, built according to the invention, is associated to the communication server CS. The main media gateway MMGW is linked to a public switched telephone network PSTN. It can be used for establishing communications between terminals of the main site A and analog terminals of the public switched telephone network PSTN, for instance the terminal T4, or mobile terminals linked to a public mobile land network. The main media gateway MMGW comprises:
   -- A set of main service clients supporting respectively the protocols LDAP, SNMP, RADIUS, HTTP/TFTP.
   -- A service relay MSRY supporting the protocol HDLC.

This exemplary enterprise network comprises, on a remote site B:
- IP user terminals T1, T2. They are linked to the IP network IPN via an Ethernet local area network (not represented). All the IP terminals T1, T2, T3, of the enterprise network comprise service clients (For instance a LDAP client for the phone book service; a SNMP client for network administration, a RADIUS client for authentication) and applications over HTTP for telephony web applications, etc.
- A remote media gateway RMGW, built according to the invention. It is linked to the public switched telephone network PSTN and to an Ethernet local area network (not represented). The remote media gateway RMGW can be used for establishing communications between IP terminals of the remote site B and analog terminals of the public switched telephone network PSTN, for instance the terminal T4, or mobile terminals linked to a public land mobile network. The remote media gateway RMGW comprises:
   -- A call agent CA.
   -- A response cache memory CM that memorizes responses previously received from the main servers MSV (PBS, AUS, TWS), in order to avoid forwarding several times a same request from a terminal of the remote site B to the servers MSV in the main site A, and forwarding a same response from the main site, when an appropriate response has already been received in the remote site B. This cache memory CM saves communication resources.
   -- Remote service relays RSRY (LDAP, service relay, RADIUS service relay, HTPP service relay, etc) that are respectively dedicated to the services provided by the main servers MSV (PBS, AUS, TWS). Each service relay accepts relevant requests originating from terminal T1, T2 of the remote site B, and forwards these requests to the relevant main server PBS, or AUS, or TWS in the main site A.
   -- Remote servers RSV that are respectively dedicated to the services provided by the main servers MSV (PBS, AUS, TWS).

When the IP network IPN is working normally, terminals T3, ... etc of the main site A classically use the session initiation protocol SIP, through the Call Server CS, to establish phone calls with IP terminals T1, T2, ... of remote site B, via the two local area networks that are linked by the IP network IPN. The IP network IPN also supports the signalling channels used between the main site A and the remote site B, for providing: the phone book service, authentication service, and telephony web services, to the terminals T1, T2 ... of the remote site B.

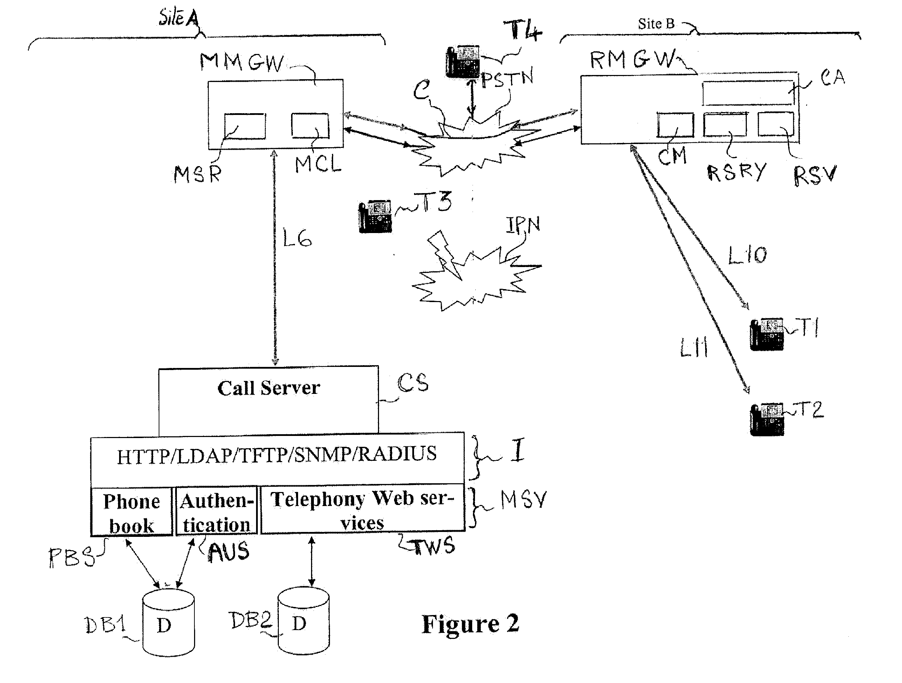

**Figure 2** is a block diagram showing the same exemplary enterprise network, and illustrating the case where the IP network IPN between the main site A and a remote site B, is not working normally. The IP network IPN does not support any more the signaling channels used between the main site A and the remote site B for providing the phone book service, authentication service, and telephony web services, ..., to the terminals T1, T2, ... of the remote site B. In addition, IP terminals T3, ... of the main site A cannot directly establish phone calls with IP terminals T1, T2, ... , of remote site B, via the IP network IPN.

The automatic call agent CA of the remote media gateway RMGW detects the failure of the IP network IPN and establishes a backup channel C; for instance a n x 64 Kbits/s time division multiplex, where n is an integer number predetermined according to the expected traffic between the two sites. The main media gateway MMGW and the remote media gateway RMGW classically convert the IP voice and signaling packets into time division multiplexed signals, and reciprocally, for replacing the lost IP link between the two sites A and B.

The backup communication channel C can be supported by any external trunk (E1/T1, or analog, or wireless) supported by a public network. This communication channel C will be used if needed to convey the service requests and service responses between the terminals T1, T2 of the remote site B and the main servers MSV (PBS, AUS, TWS) associated to the call server CS.

Each terminal, T1, T2, ..., of the remote site B, which comprises a service dedicated client (Phone book LDAP, RADIUS authentication, telephony web application over HTTP,...) has been previously configured in order to setup the remote gateway RMGW as a backup server for the corresponding service. When a service request is to be sent to the main site A, the call agent CA of the remote media gateway RMGW, establishes a LDAP, or RADIUS, or HTTP session on the backup channel C (according to the type of service that is currently requested).

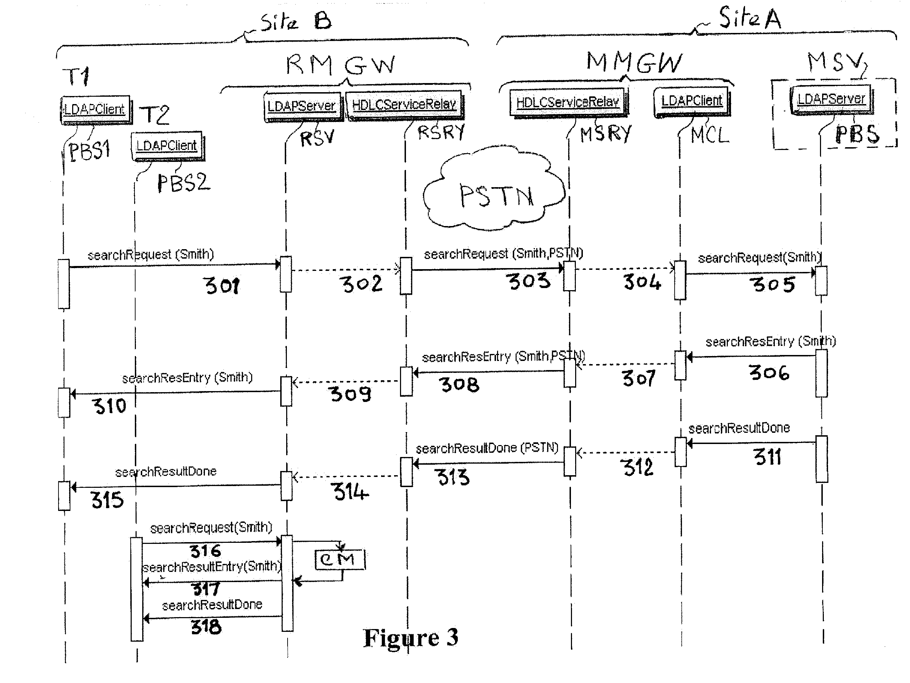

**Figure 3** shows a signaling flow in this exemplary enterprise network, for using the phone book service, when the IP link between the two sites is not working:
- 301: The user of the terminal T1 wants to know the phone number of Mr Smith. This user uses the LDAP client of the terminal T1 to prepare a request. This client sends the request to the LDAP server SRV of the remote media gateway RMGW.
- 302: The LDAP server SRV of the remote media gateway RMGW forwards this request to the HDLC service relay RSRY of the remote media gateway RMGW.
- 303: The HDLC service relay RSRY of the remote media gateway RMGW sends the request to the HDLC service relay MSRY of the main media gateway MMGW.
- 304: The HDLC service relay MSRY of the main media gateway MMGW forwards the request to the LDAP client MCL of the main media gateway MMGW.
- 305: The LDAP client MCL of the main media gateway MMGW forwards the request to the LDAP server constituting the phone book server PBS.
- 306: The phone book server PBS consults the data base DB1 and sends a response (phone number of Mr Smith) to the LDAP client MCL of the main media gateway MMGW.
- 307: The LDAP client MCL of the main media gateway MMGW forwards the response to the HDLC service relay MSRY of the main media gateway MMGW.
- 308: The HDLC service relay MSRY of the main media gateway MMGW forwards the response to the HDLC service relay RSRY of the remote media gateway RMGW.
- 309: The HDLC service relay RSRY of the remote media gateway RMGW forwards the response to the LDAP server RSV of the remote media gateway RMGW.
- 310: The LDAP server RSV of the remote media gateway RMGW forwards the response to the LDAP client PBS1 of the terminal T1.
- 311: In this example, there is only one response, because there is only one Mr Smith in the enterprise directory. So the phone book server PBS sends an indication, to the LDAP client MCL of the main media gateway MMGW, to indicate that the response process is over, with success.
- 312: The LDAP client MCL of the main media gateway MMGW forwards the indication to the HDLC service relay MSRY of the main media gateway MMGW.
- 313: The HDLC service relay MSRY of the main media gateway MMGW forwards the indication to the HDLC service relay RSRY of the remote media gateway RMGW.
- 314: The HDLC service relay RSRY of the remote media gateway RMGW forwards the indication to the LDAP server RSV of the remote media gateway RMGW.
- 315: The LDAP server RSV of the remote media gateway RMGW forwards the indication to the LDAP client PBS1 of the terminal T1. Later, the user of the terminal T2 wants to know the phone number of the same Mr Smith:
- 316: This user uses the LDAP client of the terminal T2 to prepare a request. This client sends the request to the LDAP server SRV of the remote media gateway RMGW.
- 317: The LDAP server SRV of the remote media gateway RMGW checks the content of the cache memory CM and finds that a same request was previously responded. It reads the response (phone number of Mr Smith) and sends it to the LDAP client PBS2 of the terminal T2.
- 318: In this example, there is only one response, because there is only one Mr Smith in the enterprise directory. So LDAP server SRV of the remote media gateway RMGW sends an indication, to the LDAP client PBS2 of the terminal T2, to indicate that the response process is over, with success.

The method according to the invention can be applied to any other non real time service provided by the main site of an enterprise network. Other services may be implemented, based upon this system, to provide telephony services:
- Telephony services such as "call forwarding", "call by name",..., and operation requested through HTTP.
- Download configuration files (XML,...) are requested through HTTP/TFTP.
- Remote Authentication Dial-In User Service is requested through RADIUS.
- Network management services are requested through Simple Network Management Protocol (SNMP).

## Claims

1. A gateway (RMGW) for the survivability of services in an enterprise network that comprises a main site (A) and at least one remote site (B), the main site comprising a main media gateway (MMGW) and at least a main server (PBS, AUS, TWS) dedicated to a given service;
and the remote site comprising said gateway (RMGW) and terminals (T1, T2) that can request at least this given service from said main server (PBS, AUS, TWS) via an Internet protocol network (IPN);
**characterized in that** it comprises:
- means (CA) for detecting whether the Internet protocol network (IPN) is not working, and establishing a backup communication channel (C) to the main site (A) via a public telephone network (PSTN) when the Internet network (IPN) is not working;
- a remote server (RSV), dedicated to said given service, for receiving (301) a service request from a terminal (T1) of the remote site (B) when the Internet protocol network (IPN) is not working; and for forwarding it;
- and a remote service relay (RSRY) for receiving the request forwarded by the local server (RSV) and forwarding (303) it to the main site via the backup communication channel (C), by means of a protocol adapted to said given service.

2. A gateway (RMGW) according to claim 1, that further comprises a cache memory (CM); and wherein said remote server (RSV) comprises means for:
- checking (316) the content of this cache memory (CM) for determining whether a same request was previously responded;
- reading (316) the response in the cache memory (CM) if a same request was previously responded;
- and sending (317) the response to the terminal (T2) that sent the request.

3. A gateway (MMGW) for the survivability of services in an enterprise network that comprises a main site (A) and at least one remote site (B), the main site comprising said media gateway (MMGW) and at least a main server (PBS, AUS, TWS) dedicated to a given service;
and the remote site comprising a remote gateway (RMGW) and terminals (T1, T2) that can request at least this given service from said main server (PBS, AUS, TWS) via an Internet protocol network (IPN);
**characterized in that** it comprises:
- a main service relay (MSRY) for receiving (303) a service request via a backup link (C) supported by a public telephone network (PSTN) when the Internet protocol network (IPN) is not working, said service request being sent by means of a protocol adapted to said given service, and originating from a terminal of the remote site (B); and for forwarding it (304);
- a main client (MCL) dedicated to said given service, for receiving (304) a service request forwarded by the main service relay (MSRY), and for forwarding it (305) to the main server (PBS, AUS, TWS) dedicated to said given service.
